# EUROPEAN PATENT APPLICATION

(11) **EP 3 476 707 A1**
(43) Date of publication of application: **01.05.2019**
(21) Application number: 18201965.3
(22) Date of filing: 23.10.2018
(51) Int. Cl.: B62J 25/00, B62K 11/10, B62J 7/00

(54) **SADDLE RIDING VEHICLE**

(30) Priority: 26.10.2017 IN 201741037911
(71) Applicant: Honda Motor Co., Ltd., Minato-ku, Tokyo 107-8556 (JP)
(72) Inventor: Deep, Vikas, IMT Manesar, Gurgaon Haryana-122050 (IN); Jain, Yash, IMT Manesar, Gurgaon Haryana-122050 (IN); Kaul, Deepak, IMT Manesar, Gurgaon Haryana-122050 (IN)
(74) Representative: Weickmann & Weickmann PartmbB

(57) **Abstract**

A motorcycle includes a step floor (20) on which a driver's legs are placed, and step floor enlarged sections (30) installed at both of left and right sides of the step floor (20). The step floor enlarged sections (30) cause a leftward/rightward width of a floor portion including the step floor (20) to be variable between a first leftward/rightward width (20A) and a second leftward/rightward width (30A) that is larger than the first leftward/rightward width (20A).

## Description

### BACKGROUND OF THE INVENTION

### Field of the Invention

The present invention is a saddle riding vehicle.

Priority is claimed on Indian patent application No. 201741037911 filed on October 26, 2017, the contents of which are incorporated herein by reference.

### Description of Related Art

Among saddle riding vehicles, a scooter type motorcycle including a step floor on which a driver's legs are placed is known.

For example, a motorcycle disclosed in Patent Literature 1 includes a seat frame configured to support a seat from below. The seat frame is curved to swell toward one side in a vehicle width direction. The seat frame forms an article receiving space opening toward a step floor while opening toward the other side in the vehicle width direction. Luggage that is wide in a vehicle width direction and elongated in a forward/rearward direction can be received in the article receiving space below the seat.

### [Patent Documents]

[Patent Document 1] Japanese Unexamined Patent Application, First Publication No. 2007-30827

### SUMMARY OF THE INVENTION

The motorcycle disclosed in Patent Literature 1 is considered to accommodate an article under the seat. However, since the article receiving space below the seat is open, received articles are limited. For this reason, a configuration for placing a long object or securing a space for a driver to put his/her legs by effectively using a step floor on which the driver's legs are placed is required.

In consideration of the above-mentioned circumstances, the present invention is directed to provide a saddle riding vehicle capable of improving a loading property and ride comfort of a step floor.

As a means of solving the task, the present invention disclosed in claim 1 is a saddle riding vehicle including: a step floor (20, 25) on which a driver's legs are placed; and a step floor enlarged section (30, 50, 60, 70) installed on at least one side of the step floor (20, 25) in the leftward/rightward direction, wherein the step floor enlarged section (30, 50, 60, 70) causes a leftward/rightward width of a floor portion including the step floor (20, 25) to be variable between a first leftward/rightward width (20A) and a second leftward/rightward width (30A, 50A, 60A, 70A) that is larger than the first leftward/rightward width (20A).

The present invention disclosed in claim 2 is the saddle riding vehicle disclosed in claim 1, wherein the step floor enlarged section (30, 60, 70) includes a floor plate (33, 63, 73) pivotable about a pivot shaft (32A, 65, 71A) disposed at a side end portion of the step floor (20, 25).

The present invention disclosed in claim 3 is the saddle riding vehicle disclosed in claim 2, wherein the step floor enlarged section (30, 60, 70) is connected to the side end portion of the step floor (20, 25) or a vehicle body frame (5) via the pivot shaft (32A, 65, 71A).

The present invention disclosed in claim 4 is the saddle riding vehicle disclosed in claim 2 or 3, wherein a pivotal movement restriction section (40) configured to restrict pivotal movement of the step floor enlarged section (30, 60, 70) when the step floor enlarged section (30, 60, 70) is open is installed between the step floor enlarged section (30, 60, 70) and the step floor (20, 25) or the vehicle body frame (5).

The present invention disclosed in claim 5 is the saddle riding vehicle disclosed in any one of claims 2 to 4, wherein the pivot shaft (32A, 71A) is installed parallel to the step floor (20, 25) in a vehicle forward/rearward direction.

The present invention disclosed in claim 6 is the saddle riding vehicle disclosed in claim 1, wherein the step floor enlarged section (50, 60) is installed to be pulled out of a receiving position below the step floor (20, 25) outward in a leftward/rightward direction.

The present invention disclosed in claim 7 is the saddle riding vehicle disclosed in claim 6, wherein the step floor enlarged section (60) includes a pivot shaft (65), the pivot shaft (65) is installed to be perpendicular to the step floor (20, 25), and the step floor enlarged section (60) is able to be pulled out of the receiving position outward in the leftward/rightward direction by pivotal movement about the pivot shaft (65).

The present invention disclosed in claim 8 is the saddle riding vehicle disclosed in any one of claims 1 to 7, wherein the step floor (20) includes the step floor enlarged section (30, 50, 60, 70), and the entire upper surface is formed to be flat.

The present invention disclosed in claim 9 is the saddle riding vehicle disclosed in any one of claims 1 to 7, wherein the step floor (25) has a concave section (26) formed in an upper surface thereof in an arc-shaped cross section and extending in the leftward/rightward direction.

The present invention disclosed in claim 10 is the saddle riding vehicle disclosed in any one of claims 1 to 9, wherein the saddle riding vehicle is a scooter type vehicle, a rear body (15) standing up behind the step floor (20, 25) and a seat (12) disposed above the rear body (15) are provided, and an article receiving section (13) having an upper opening that is covered with the seat (12) to be opened and closed is provided in the rear body (15).

According to the present invention disclosed in claim 1, the step floor enlarged section configured to cause the leftward/rightward width of the floor portion of the step floor to be variable between the first leftward/rightward width and the second leftward/rightward width that is larger than the first leftward/rightward width is installed on at least one side of the step floor in the leftward/rightward direction. Accordingly, the step floor enlarged section widened outward in the leftward/rightward direction can be used as an extension floor on which an article or legs are placed. For this reason, an object that is elongated in the leftward/rightward direction can be placed on the step floor or a space for a driver to put his/her legs can be secured while an article is placed on the step floor. Accordingly, a loading property and ride comfort of the step floor can be improved.

According to the present invention disclosed in claim 2, the floor plate overhangs outward from the side end portion of the step floor in the leftward/rightward direction and the leftward/rightward width of the floor portion of the vehicle is the second leftward/rightward width. That is, the leftward/rightward width of the floor plate itself serves as a widened width portion of the floor portion. For this reason, the leftward/rightward width of the floor portion can be efficiently enlarged.

According to the present invention disclosed in claim 3, when the step floor enlarged section is connected to the side end portion of the step floor, the step floor enlarged section overhangs outward from the outermost side of the floor portion of the step floor in the leftward/rightward direction. For this reason, the leftward/rightward width of the step floor can be efficiently enlarged. When the step floor enlarged section is connected to the side end portion of the vehicle body frame, the pivot shaft is strongly fixed to the vehicle body frame. For this reason, the step floor enlarged section can be stably supported with respect to the vehicle body frame.

According to the present invention disclosed in claim 4, the step floor enlarged section is held in a deployed state overhanging outward from the step floor by the pivotal movement restriction section installed between the step floor enlarged section and the step floor or the vehicle body frame. Accordingly, an article or legs can be stably placed on the step floor enlarged section.

According to the present invention disclosed in claim 5, the step floor enlarged section is parallel to the step floor in both of the deployed state and the housing state due to the pivot shaft parallel to the step floor and compact housing of the step floor enlarged section and efficient enlargement of the floor portion can be achieved. In addition, as the pivot shaft is directed in the vehicle forward/rearward direction at the side end portion of the step floor, the floor portion can be efficiently enlarged with the leftward/rightward width of the step floor enlarged section.

According to the present invention disclosed in claim 6, since the step floor enlarged section is pulled out of the receiving position below the step floor, the step floor enlarged section can be pulled out or received even in a state in which an article is placed on the floor surface. For this reason, the leftward/rightward width of the floor portion can be easily varied.

According to the present invention disclosed in claim 7, since the step floor enlarged section is pivoted about the pivot shaft perpendicular to the step floor to be pulled outward in the leftward/rightward direction, an operation is likely to be more smoothly performed than linear extraction. For this reason, the leftward/rightward width of the step floor can be more simply enlarged.

According to the present invention disclosed in claim 8, since the entire upper surface including the step floor enlarged section of the step floor is formed to be flat, an article can be stably placed on the step floor.

According to the present invention disclosed in claim 9, since the concave section formed in an arc-shaped cross section and extending in the leftward/rightward direction is formed in the upper surface of the step floor, an unstable article such as a cylindrical tank or the like can also be stably placed on the step floor.

According to the present invention disclosed in claim 10, since the article receiving space below the seat is shielded from the outside with the rear body, the article receiving space can receive the article regardless of the kind of the article. In addition, an object elongated in the leftward/rightward direction can be placed on the step floor or a space for a driver to put his/her legs can be secured. Accordingly, convenience in a scooter type saddle riding vehicle can be improved.

### BRIEF DESCRIPTION OF THE DRAWINGS

FIG. 1 is a perspective view showing a state in which a step floor enlarged section of a motorcycle according to a first embodiment of the present invention is deployed.
FIG. 2 is a plan view of FIG. 1.
FIG. 3 is a perspective view showing a state in which the step floor enlarged section of the step floor of the motorcycle is folded.
FIG. 4 is a perspective view showing a state in which the step floor enlarged section in FIG. 3 is deployed.
FIG. 5 is a perspective view showing a vehicle body frame and a floor main body of the motorcycle.
FIG. 6 is a perspective view showing a state in which the step floor enlarged section in FIG. 5 is installed.
FIG. 7 is a perspective view showing a state in which a floor mat in FIG. 6 is laid.
FIG. 8A is a view for describing an example of a pivotal movement restriction section of the step floor enlarged section, showing an example in which a stopper is installed on the step floor.
FIG. 8B is a view for describing the pivotal movement restriction section of the step floor enlarged section, showing an example in which a stopper is installed on the vehicle body frame.
FIG. 8C is a view for describing the pivotal movement restriction section of the step floor enlarged section, showing an example in which the stopper installed on the floor plate butts against the step floor.
FIG. 8D is a view for describing the pivotal movement restriction section of the step floor enlarged section, showing an example in which the stopper installed on the floor plate butts against the vehicle body frame.
FIG. 9 is a perspective view showing a state in which the step floor enlarged section of the motorcycle is folded.
FIG. 10 is a plan view showing a first variant of the step floor enlarged section.
FIG. 11 is a plan view showing a second variant of the step floor enlarged section.
FIG. 12 is a perspective view showing a variant of the step floor.
FIG. 13 is a perspective view showing a state in which a step floor enlarged section of a motorcycle according to a second embodiment of the present invention is folded.
FIG. 14 is a perspective view showing a state in which the step floor enlarged section in FIG. 13 is deployed.
FIG. 15 is a perspective view showing a state in which a step floor enlarged section of a motorcycle according to a variant of the second embodiment is folded.
FIG. 16 is a perspective view showing a state in which the step floor enlarged section in FIG. 15 is deployed.

### DETAILED DESCRIPTION OF THE INVENTION

Hereinafter, an embodiment of the present invention will be described with reference to the accompanying drawings. Further, "forward", "rearward", "leftward", "rightward", and the like described below are the same as directions in a vehicle described below unless the context clearly indicates otherwise. In addition, in appropriate places in the drawings used in the following description, an arrow FR showing a forward direction with respect to a vehicle, an arrow LH showing a leftward direction with respect to the vehicle and an arrow UP showing an upward direction with respect to the vehicle are provided.

### <First embodiment>

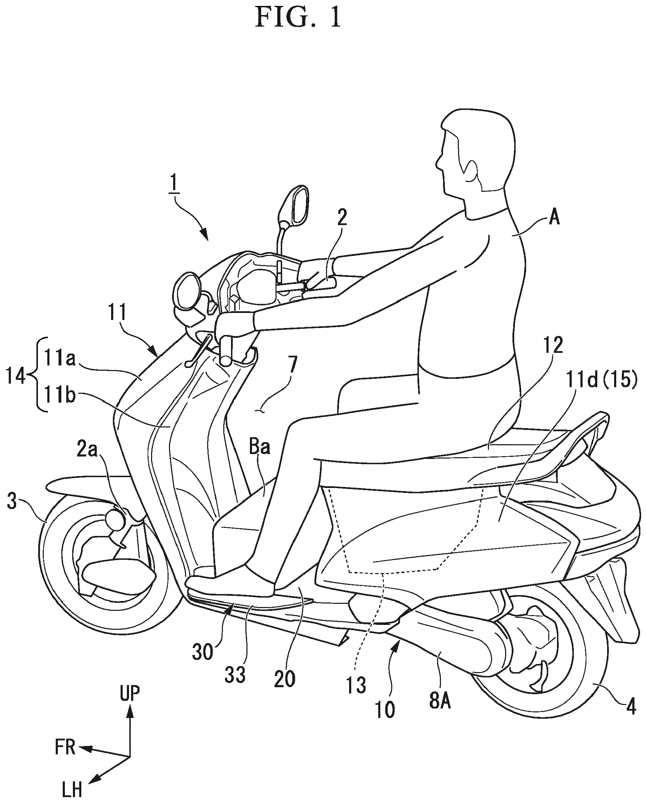

In FIG. 1, a scooter type motorcycle 1 is shown as an example of a saddle riding vehicle. The motorcycle 1 includes a front wheel 3 that is a steered wheel, and a rear wheel 4 that is a drive wheel. The front wheel 3 is supported by front forks 2a, and can be steered by a bar handle 2. The rear wheel 4 is supported by a swing type power unit 10, and can be driven by the power unit 10.

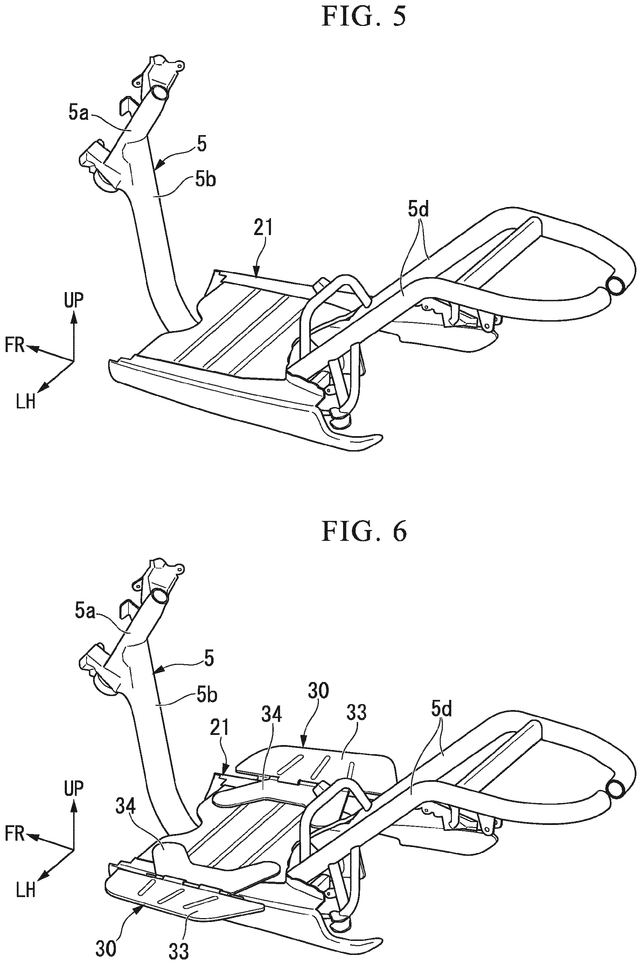

Referring also to FIG. 5, steering system parts including the bar handle 2, the front forks 2a and the front wheel 3 are steerably supported by a front end portion of a vehicle body frame 5. The power unit 10 and the rear wheel 4 are vertically swingably supported by a lower section of the vehicle body frame 5.

Referring to FIG. 5 and FIG. 13 to FIG. 16, the vehicle body frame 5 is integrally coupled by, for example, a plurality of kinds of steel members by welding or the like. The vehicle body frame 5 includes a head pipe 5a disposed at a front end portion, a main frame 5b extending diagonally downward and rearward from the head pipe 5a and then extending to be curved rearward at a lower section of a vehicle body, a cross frame 5c connected to a rear end portion of the main frame 5b, and left and right rear frames 5d extending diagonally upward and rearward from both of left and right sides of the cross frame 5c and then extending to be curved rearward. The vehicle body frame 5 includes left and right floor side frames 5e installed at both sides of the lower section of the main frame 5b and configured to support a step floor 20.

Returning to FIG. 1, the step floor 20 on which a driver A puts his/her legs is installed between the front wheel 3 and the rear wheel 4. The step floor 20 has an upper surface (a floor surface 22) that is planar throughout a leftward/rightward width of a lower floor section and substantially flush with the lower floor section. A leg shield 14 is installed in front of the step floor 20. A rear body 15 is installed behind the step floor 20. A seat 12 on which a passenger sits is supported on the rear body 15. A space (a space above the step floor 20) between the bar handle 2 and the seat 12 is a straddling space 7 when the driver A straddles the vehicle body.

The power unit 10 integrally includes an engine (not shown) that is an internal combustion engine, and a transmission (for example, a belt type continuously variable transmission) 8A configured to transmit a drive force generated in the engine to the rear wheel 4.

The vehicle body of the motorcycle 1 is covered with a vehicle body cover 11. The vehicle body cover 11 includes a front cover 11a configured to cover a periphery of the head pipe 5a of the vehicle body frame 5 from the front, an inner cover 11b configured to cover the periphery of the head pipe 5a from behind, a floor main body 21 configured to cover a lower section of the vehicle body frame 5 from above, and a rear body cover 11d configured to cover a periphery of the rear frames 5d of the vehicle body frame 5 from the front, the sides and behind.

The front cover 11a and the inner cover 11b constitute the leg shield 14. The rear body cover 11d forms an outer surface of the rear body 15. An article receiving section 13 having a container shape, an upper side of which is open, is disposed inside the rear body cover 11d. The article receiving section 13 has an upper opening that is opened and closed by pivotal movement of the seat 12.

Next, a structure of the step floor of the motorcycle 1 will be described.

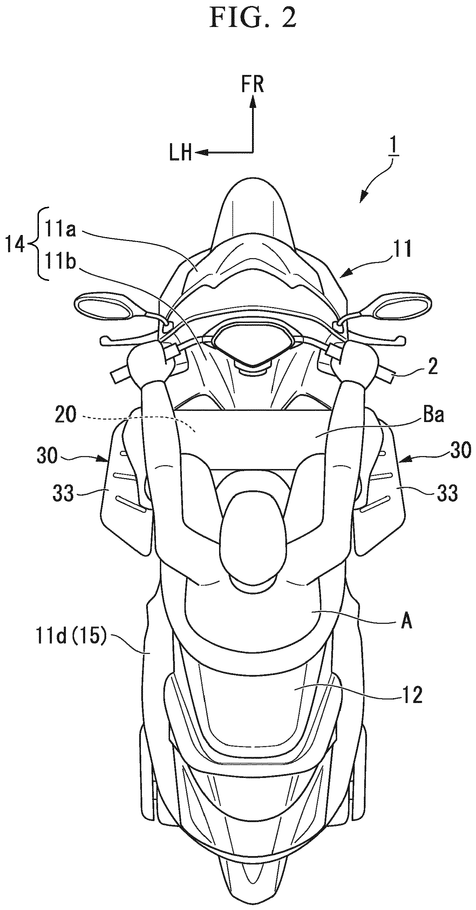

Referring to FIG. 1 to FIG. 4, the motorcycle 1 includes left and right step floor enlarged sections 30 at both of left and right sides of the step floor 20. The step floor enlarged sections 30 include floor plates 33 pivotable about pivot shafts (hinge shafts) 32A disposed at side end portions of the step floor 20, and a base plate 34 connected to the floor plates 33 via the pivot shafts 32A. The step floor 20 is configured to include the floor main body 21 and the vehicle body frame 5. The side end portion of the step floor 20 is configured to include a side end portion of at least one of the floor main body 21 and the vehicle body frame 5.

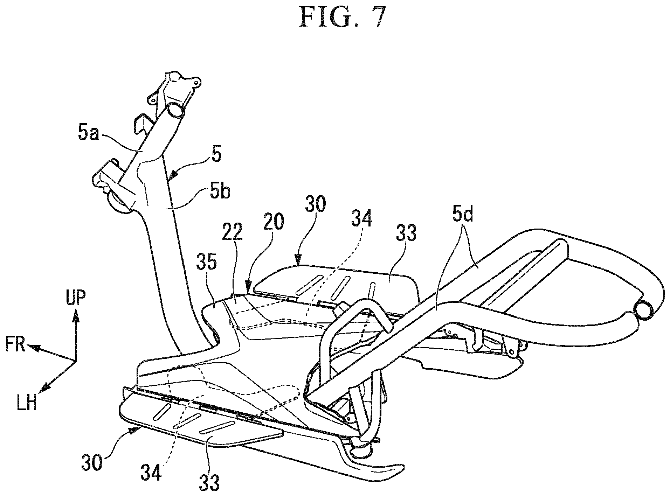

Referring to FIG. 5 to FIG. 7 together, the base plate 34 overlaps both of left and right sides of the floor main body 21 from above, and for example, is fixed to the vehicle body frame 5 by a joint with the floor main body 21. A floor mat 35 is laid on the floor main body 21 (including the base plate 34). An upper surface of the floor mat 35 serves as the floor surface 22.

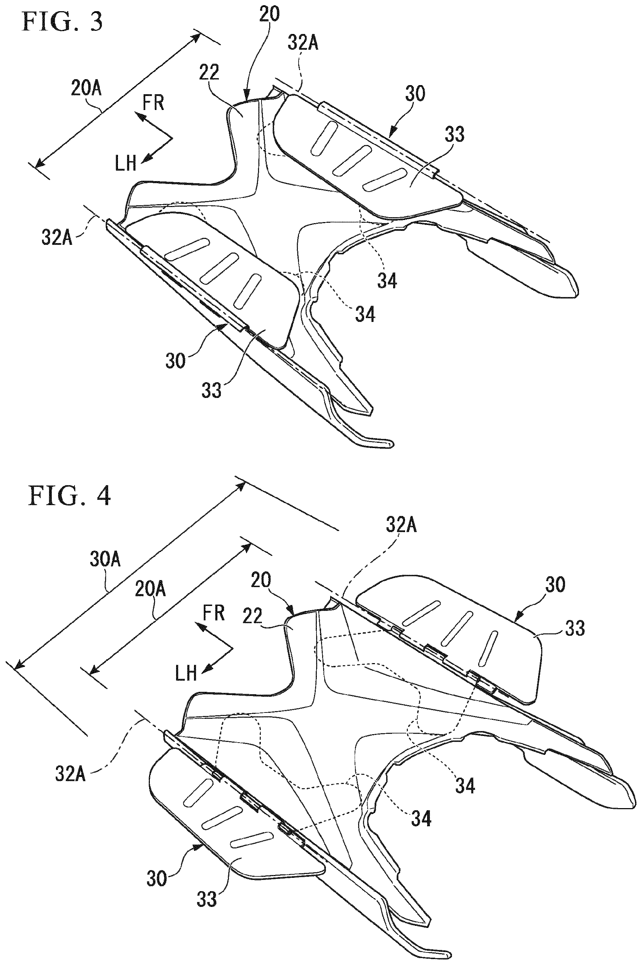

The pivot shafts 32A extend in a vehicle forward/rearward direction. As the floor plates 33 are pivoted about the pivot shafts 32A, a leftward/rightward width of a floor portion including the step floor 20 is varied. That is, the leftward/rightward width of the floor portion is variable between a first leftward/rightward width 20A when the floor plates 33 are folded (see FIG. 3) and a second leftward/rightward width 30A when the floor plates 33 are deployed (see FIG. 4).

The second leftward/rightward width 30A is larger than the first leftward/rightward width 20A. The floor plates 33 are folded to overlap the step floor 20 (a housing state). The floor plates 33 are deployed to overhang outward from side end portions of the step floor 20 in a vehicle width direction (a deployed state). Accordingly, even when long luggage Ba is mounted across the entire width of the step floor 20, a place for the driver A's legs can be secured. The floor plates 33 are substantially parallel to the step floor 20 in both the housing state and the deployed state.

Further, the base plate 34 may be eliminated, and the floor plates 33 may be connected directly to the side end portions of the floor main body 21 via the pivot shafts 32A. In addition, the floor plates 33 may be connected to the side end portions of the vehicle body frame 5 that are the side end portions of the step floor 20 via the pivot shafts 32A. The pivot shafts 32A may be inclined in the vehicle forward/rearward direction.

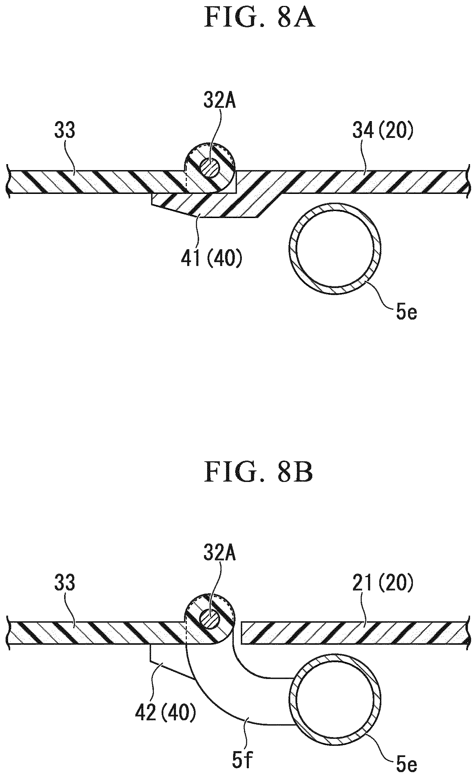

As shown in FIG. 8A to FIG. 8D, pivotal movement restriction sections 40 configured to restrict pivotal movement of the floor plates 33 upon deployment are installed in the vicinity of, for example, the pivot shafts 32A of the step floor enlarged sections 30.

The pivotal movement restriction sections 40 include various kinds of stoppers 41 to 44 shown in FIG. 8A to FIG. 8D.

The stoppers 41 shown in FIG. 8A are installed to protrude outward from the side end portion of the step floor 20 (the base plate 34) in the vehicle width direction. As lower surfaces of the floor plates 33 in the deployed state abut upper end surfaces of the stoppers 41, pivotal movement of the floor plates 33 in the deployed state is restricted.

The stoppers 42 shown in FIG. 8B are installed to protrude outward from the side end portions of the lower section (the floor side frames 5e) of the vehicle body frame 5 in the vehicle width direction. Here, hinge brackets 5f protruding outward in the vehicle width direction are fixed to the floor side frames 5e of the lower section of the vehicle body frame 5. The hinge brackets 5f constitute the side end portions of the lower section of the vehicle body frame 5. The stoppers 42 protruding further outward in the vehicle width direction are installed on the hinge brackets 5f. As the lower surfaces of the floor plates 33 in the deployed state abut the upper end surfaces of the stoppers 42, pivotal movement of the floor plates 33 in the deployed state is restricted.

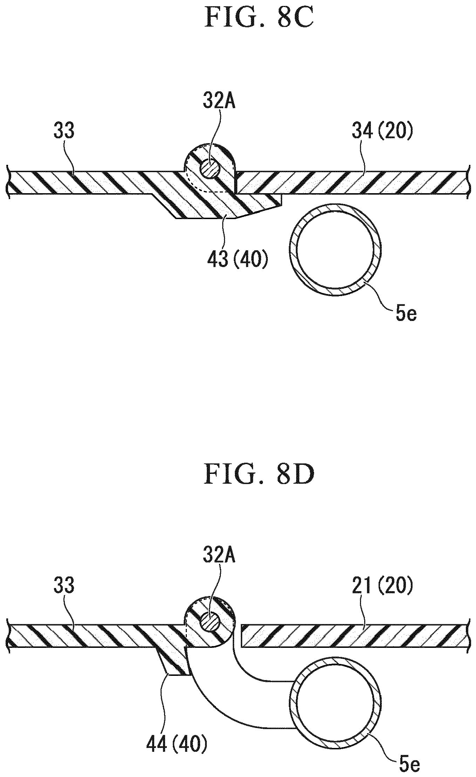

The stoppers 43 shown in FIG. 8C protrude from lower surfaces of the floor plates 33 in the deployed state. The stoppers 43 abut, for example, the lower surface of the step floor 20 (the base plate 34) when the floor plates 33 are in the deployed state. Accordingly, pivotal movement of the floor plates 33 in the deployed state is restricted.

Like the stoppers 43 shown in FIG. 8C, the stoppers 44 shown in FIG. 8D protrude from the lower surfaces of the floor plates 33 in the deployed state. The floor plates 33 shown in FIG. 8D are connected to the hinge brackets 5f of the vehicle body frame 5. The stoppers 44 abut, for example, outer surfaces of the hinge brackets 5f from outside in the vehicle width direction when the floor plates 33 are in the deployed state. Accordingly, pivotal movement of the floor plates 33 in the deployed state is restricted.

The pivotal movement restriction sections 40 restrict further pivotal movement in a deployment direction of the floor plates 33 in the deployed state. The pivotal movement restriction sections 40 are disposed to be substantially flush with the floor surface 22 of the step floor 20 and the upper surfaces (floor extension surfaces) of the floor plates 33 in the deployed state. Accordingly, a flat floor portion having a large leftward/rightward width can be formed on the lower floor section of the motorcycle 1. As a result, large luggage can also be stably placed on the upper surface of the wide floor portion.

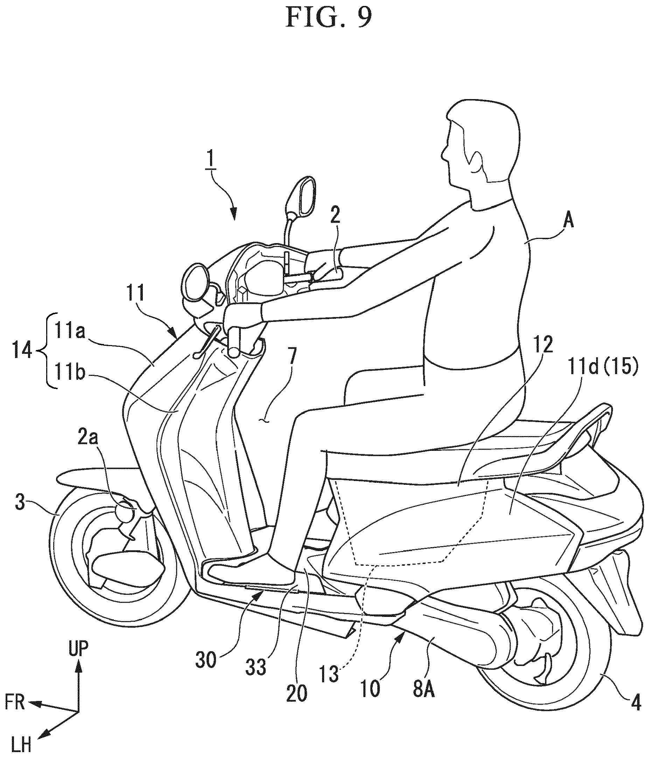

As shown in FIG. 9, in the motorcycle 1, when luggage is not placed on the step floor 20 or small luggage is transported, the step floor enlarged sections 30 are folded. Accordingly, the leftward/rightward width of not only the lower floor section but also the vehicle body lower section is suppressed, and the driver A's legs can easily contact the ground. In addition, even during push-walking, it is easy to bring a user's body to the vehicle body, and operability of the motorcycle 1 is improved.

As shown in FIG. 1, in the motorcycle 1, when long luggage Ba that crosses the entire width of the step floor 20 is transported, the step floor enlarged sections 30 are deployed. Accordingly, the leftward/rightward width of the floor portion is increased, the long luggage Ba is stably placed, and the driver A's legs can be put on the floor portion.

As described above, the motorcycle 1 of the embodiment includes the step floor 20 on which the driver A's legs are placed, and the step floor enlarged sections 30 installed at both of left and right sides of the step floor 20 and the step floor enlarged sections 30 have a leftward/rightward width of the floor portion including the step floor 20 that is variable between the first leftward/rightward width 20A and the second leftward/rightward width 30A that is larger than the first leftward/rightward width 20A.

According to the configuration, the step floor enlarged sections 30 widened outward in the leftward/rightward direction can be used as extension floors on which an article or legs are placed. For this reason, an object that is elongated in the leftward/rightward direction can be placed on the step floor 20, and a space for the driver to put his/her legs can be secured while the article is placed on the step floor 20. Accordingly, a loading property and ride comfort of the step floor 20 can be improved.

In addition, in the motorcycle 1 of the embodiment, the step floor enlarged sections 30 include the floor plates 33 that are pivotable about the pivot shafts 32A disposed at the side end portions of the step floor 20.

According to the configuration, the floor plates 33 overhang outward from the side end portions of the step floor 20 in the leftward/rightward direction, and the leftward/rightward width of the floor portion of the motorcycle 1 is the second leftward/rightward width 30A. That is, the leftward/rightward width of the floor plates 33 itself serves as a widened width portion of the floor portion. For this reason, the leftward/rightward width of the floor portion can be efficiently enlarged.

In addition, in the motorcycle 1 of the embodiment, the step floor enlarged sections 30 are connected to the side end portions of the step floor 20 or the vehicle body frame 5 via the pivot shafts 32A.

According to the configuration, when the floor plates 33 are connected to the side end portions of the step floor 20, the floor plates 33 overhang outward from the outermost sides of the floor portion of the step floor 20 in the leftward/rightward direction. For this reason, the leftward/rightward width of the floor portion can be more efficiently enlarged. When the floor plates 33 are connected to the side end portions of the vehicle body frame 5, the pivot shafts 32A are strongly fixed to the vehicle body frame 5. For this reason, the floor plates 33 can be stably supported with respect to the vehicle body frame 5.

In addition, in the motorcycle 1 of the embodiment, the pivotal movement restriction sections 40 configured to restrict pivotal movement of the floor plates 33 when the floor plates 33 are open are installed between the step floor enlarged sections 30 and the step floor 20 or the vehicle body frame 5.

According to the configuration, the floor plates 33 are held in the deployed state in which the floor plates 33 overhang outward from the step floor 20 by the pivotal movement restriction sections installed between the step floor enlarged sections 30 and the step floor 20 or the vehicle body frame 5. Accordingly, an article or legs can be stably placed on the floor plates 33.

In addition, in the motorcycle 1 of the embodiment, the step floor enlarged sections 30 are parallel to the step floor 20 in both of the deployed state and the housing state by the pivot shafts 32A parallel to the step floor 20, and compact housing of the step floor enlarged sections 30 and efficient enlargement of the floor portion can be achieved. In addition, as the pivot shafts 32A are directed in the vehicle forward/rearward direction at the side end portions of the step floor 20, the floor portion can be efficiently enlarged with the leftward/rightward width of the step floor enlarged sections 30.

In addition, in the motorcycle 1 of the embodiment, since the entire upper surfaces including the step floor enlarged sections 30 of the step floor 20 are formed in a flat shape, the article can be stably placed on the step floor 20.

In addition, the motorcycle 1 of the embodiment includes the rear body 15 standing up behind the step floor 20, and the seat 12 disposed above the rear body 15, and the article receiving section 13 having an upper opening covered with the seat 12 to be opened and closed is provided in the rear body 15.

According to the configuration, since the article receiving section 13 below the seat 12 is shielded from the outside, the article can be received regardless of the kind of the article. In addition, an object that is elongated in the leftward/rightward direction can be placed on the step floor 20 or a storing place for legs can be secured. Accordingly, convenience in the scooter type saddle riding vehicle can be improved.

Further, in the embodiment, the pair of left and right step floor enlarged sections 30 that can enlarge a floor surface area are installed at both of left and right sides of the step floor 20. However, according to necessity, the step floor enlarged section 30 may be installed selectively at one of the left and right sides of the step floor 20.

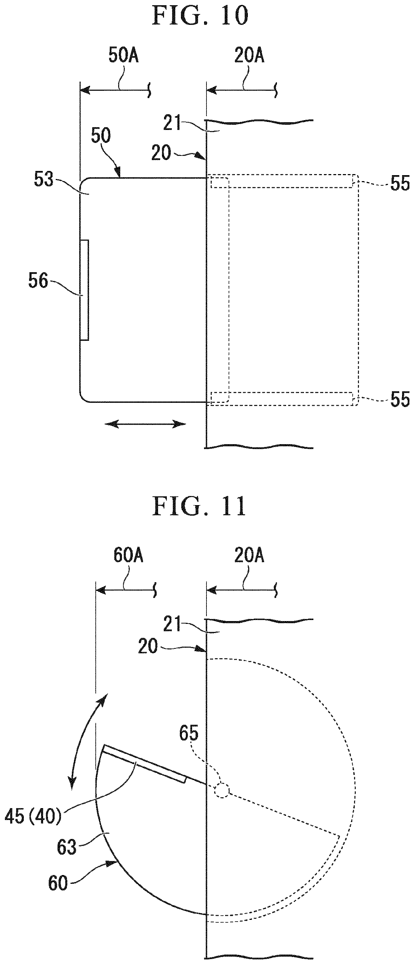

FIG. 10 shows a step floor enlarged section 50 having drawer type floor plates 53 with respect to the step floor enlarged sections 30 having the hinge opening/closing type floor plates 33. The floor plates 53 cause positions in the vehicle width direction to be variable below the upper surface (the floor surface 22) of the step floor 20. Each of the floor plate 53 is slidable between a receiving position at which the floor plate 53 is received in the step floor 20 and a drawing position at which the floor plate 53 is horizontally moved from the receiving position to be pulled outward in the vehicle width direction. The floor plate 53 forms an upper surface that is substantially parallel to the upper surface of the step floor 20. Reference numeral 55 is a guide rail configured to guide sliding of the floor plate 53, and reference numeral 56 shows a convex section serving as a sliding restriction section configured to restrict sliding of the floor plate 53 to the receiving position.

The step floor enlarged section 50 of the variant causes a leftward/rightward width of the floor portion including the step floor 20 to be variable between the first leftward/rightward width 20A and a second leftward/rightward width 50A that is larger than the first leftward/rightward width 20A.

FIG. 11 shows a step floor enlarged section 60 having a pivot type floor plate 63 along the floor surface 22 with respect to the variant of FIG. 10. The floor plate 63 causes a pivot position to be variable about a longitudinal pivot shaft 65 perpendicular to the floor surface 22 below the upper surface (the floor surface 22) of the step floor 20. The longitudinal pivot shaft 65 is a side end portion of the step floor 20. The floor plate 63 is formed in, for example, a fan shape or a semi-circular shape when seen in a plan view. The floor plate 63 is pivotable between a receiving position at which the floor plate 63 is received in the step floor 20 and a drawing position at which the floor plate 63 is horizontally pivoted from the receiving position to be pulled outward in the vehicle width direction. The floor plate 63 forms an upper surface that is substantially parallel to the upper surface of the step floor 20. Reference numeral 45 shows a convex section serving as the pivotal movement restriction section 40 configured to restrict pivotal movement of the floor plate 63 to a fully closed position.

The step floor enlarged section 60 of the variant causes a leftward/rightward width of the floor portion including the step floor 20 to be variable between the first leftward/rightward width 20A and a second leftward/rightward width 60A that is larger than the first leftward/rightward width 20A.

Even in the variant of FIG. 10 and FIG. 11, loading property and ride comfort of the step floor 20 can be improved. In addition, since the floor plates 53 and 63 are pulled out of the receiving position below the floor surface 22 of the step floor 20, the floor plates 53 and 63 can be pulled out or received even in a state in which an article is placed on the floor surface 22. For this reason, a leftward/rightward width of the floor portion can be easily varied.

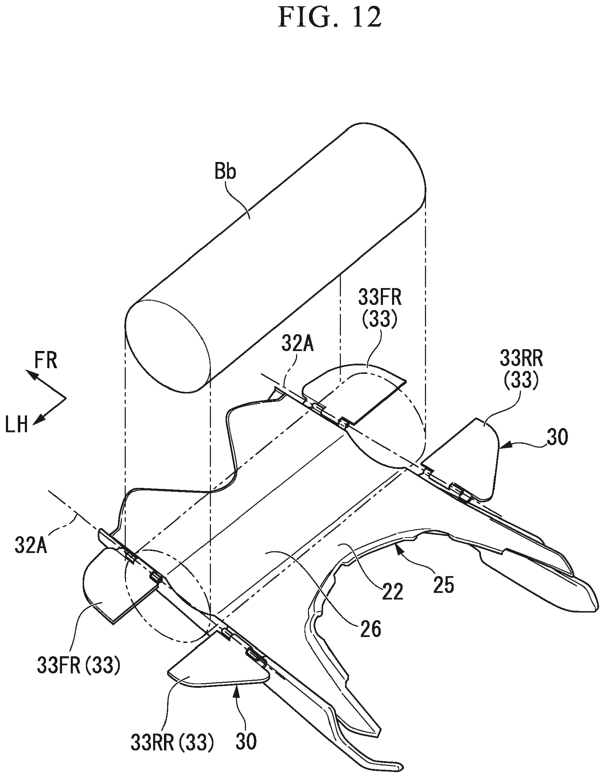

FIG. 12 shows a step floor 25 having a concave section 26 formed on an upper surface thereof according to a cylindrical luggage Bb with respect to the step floor 20 having the upper surface that is entirely flat. The concave section 26 is formed in an arc-shaped cross section to match with an outer surface of a cylindrical luggage having an axial direction that is directed toward the leftward/rightward direction. Accordingly, for example, an instable article such as a cylindrical tank or the like can also be stably placed on the step floor 25. The concave section 26 is formed at, for example, a center of the step floor 25 in the forward/rearward direction.

The step floor enlarged sections 30 of the variant have the floor plates 33 that are divided at front and rear sides to bypass the concave section 26 forward and rearward. Reference character 33FR shows a front split plate and reference character 33RR shows a rear split plate. Accordingly, interference between a luggage placed on the concave section 26 and the floor plates 33 is suppressed. The floor plate 33 is not limited to a hinge opening/closing type and may be a drawer type as shown in FIG. 10 and FIG. 11.

The floor plate 33 may be only the front split plate 33FR or only the rear split plate 33RR. In this case, the concave section 26 may be appropriately formed at a front side or a rear side of the step floor 25 in the forward/rearward direction to bypass one of the front and rear split plates 33FR and 33RR. The concave section 26 is not limited to an arc-shaped cross section and may be various cross-sectional shapes including a polygonal shape or the like.

### <Second embodiment>

Next, a second embodiment of the present invention will be described.

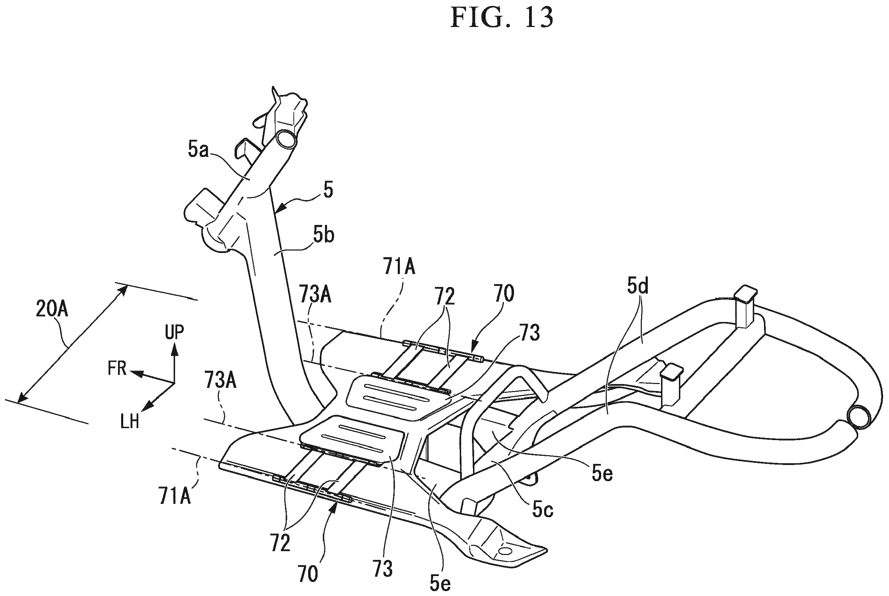

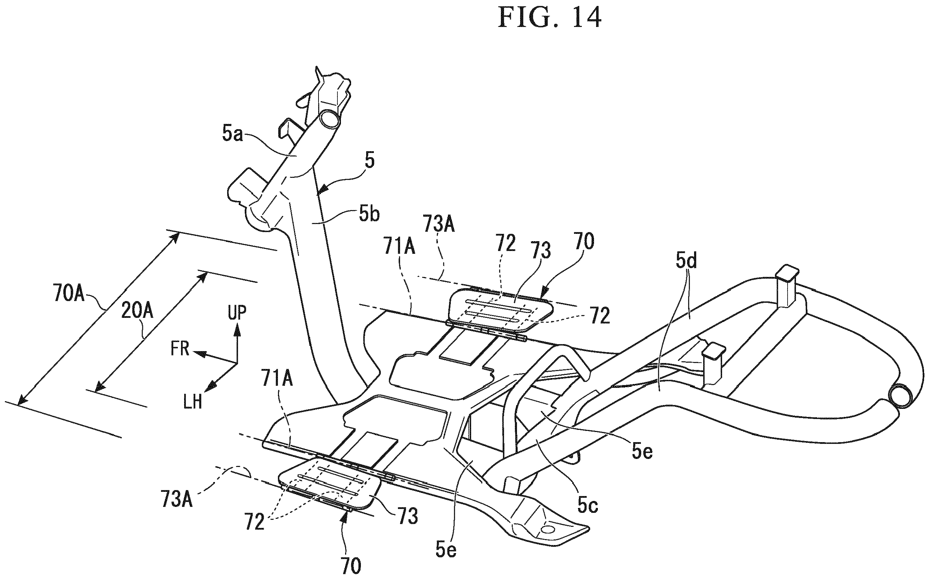

As shown in FIG. 13 and FIG. 14, the second embodiment is distinguished from the first embodiment in that floor plates 73 of step floor enlarged sections 70 are connected to the step floor 20 via connecting members 72 and two pivot shafts 71A and 73A. In addition, the same components as in the first embodiment are designated by the same reference numerals.

The connecting members 72 have base end portions connected to the side end portion of the step floor 20 via the first pivot shaft 71A. The connecting members 72 have tip portions connected to the floor plate 73 via the second pivot shaft 73A. Both of the pivot shafts 71A and 73A are parallel to each other and directed in the vehicle forward/rearward direction. Each of the connecting member 72 has, for example, a belt shape in which the vehicle forward/rearward direction is the widthwise direction. The connecting members 72 are formed as, for example, a pair of front and rear connecting members. The front and rear connecting members 72 are separated from each other in the vehicle forward/rearward direction.

The connecting members 72 pivot between a receiving position at which the connecting members 72 overlap above the step floor 20 (see FIG. 13) and a deployment position protruding substantially horizontally outward from the step floor 20 in the vehicle width direction (see FIG. 14). Pivotal movement of the connecting members 72 beyond the deployment position is restricted by the pivotal movement restriction sections 40.

The floor plates 73 are disposed at the receiving position further inside in the vehicle width direction than the tip portions of the connecting members 72 when the connecting members 72 are disposed at the receiving position. The floor plates 73 are separated inward from the side end portions of the step floor 20 in the vehicle width direction by a length extent of the connecting members 72 when the floor plates 73 are disposed at the receiving position. The floor plates 73 move in an arc shape to match with movement of the tip portions of the connecting members 72. Here, the floor plates 73 are movable substantially in parallel from the receiving position to the deployment position outside in the vehicle width direction.

The floor plates 73 are disposed at the deployment position overlapping over the connecting members 72 when the connecting members 72 are disposed at the deployment position. The floor plates 73 have the same surface as the upper surface at the receiving position and the deployment position. The floor plates 73 are supported by the connecting members 72, pivotal movement of which is restricted, from below when the floor plates 73 are disposed at the deployment position. The upper surfaces of the floor plates 73 disposed at the deployment position are disposed to be flush with the floor surface 22 of the step floor 20.

The step floor enlarged sections 70 cause a leftward/rightward width of the floor portion including the step floor 20 to be variable between the first leftward/rightward width 20A and a second leftward/rightward width 70A that is larger than the first leftward/rightward width 20A.

Accordingly, the flat floor portion having a large leftward/rightward width can be formed on the lower floor section of the motorcycle 1. As a result, a large luggage can also be stably placed on the upper surface of the wide floor portion.

As described above, like the first embodiment, the motorcycle 1 of the second embodiment can also improve loading property and ride comfort of the step floor 20. In addition, since the floor plates 73 of the step floor enlarged sections 70 are varied between the receiving position and the deployment position using the same surface as the upper surface, slip stoppers or the like formed on the upper surfaces of the floor plates 73 can be used at both of the receiving position and the deployment position.

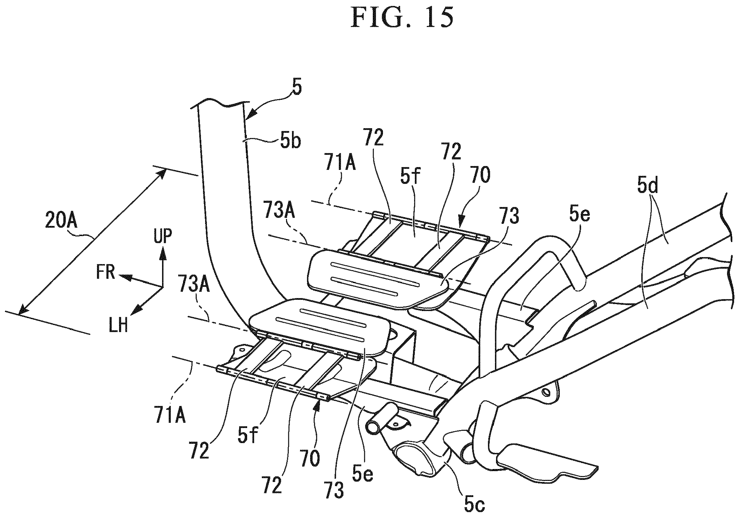

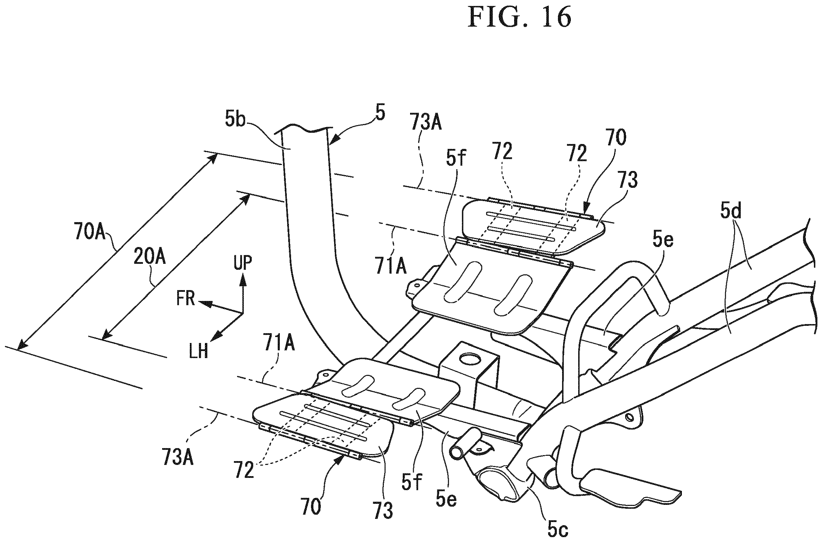

FIG. 15 and FIG. 16 show an example in which the step floor enlarged sections 70 of the second embodiment are connected to the side end portions of the lower section of the vehicle body frame 5 (the side end portions of the hinge brackets 5f fixed to the floor side frames 5e). In this case, in addition to the effect of the second embodiment, since the pivot shafts 71A are strongly fixed to the vehicle body frame 5, the floor plates 73 can be stably supported with respect to the vehicle body frame 5.

Further, the present invention is not limited to the embodiment and, for example, all vehicles in which a driver rides while straddling the vehicle body are included as the saddle riding vehicle, and in addition to a motorcycle (including a motorized bicycle and a scooter type vehicle), a three-wheeled vehicle (including a two-front-wheeled and one-rear-wheeled vehicle and a one-front-wheeled and two-rear-wheeled vehicle) and a four-wheeled vehicle are also included.

A "side end portion" on which the pivot shaft of the step floor enlarged section is formed in the embodiment is not limited to a side end of a target area. The "side end portion" includes an installation range of the pivot shaft that can increase a leftward/rightward width of the floor portion by the step floor enlarged section.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

According to the above-mentioned saddle riding vehicle, loading property and ride comfort of the step floor can be improved.

### EXPLANATION OF REFERENCES

1 Motorcycle (saddle riding vehicle)
5 Vehicle body frame
12 Seat
13 Article receiving section
15 Rear body
20, 25 Step floor
20A First leftward/rightward width
22 Floor surface
26 Concave section
30, 50, 60, 70 Step floor enlarged section
30A, 50A, 60A, 70A Second leftward/rightward width
32A, 65, 71A Pivot shaft
33, 53, 63, 73 Floor plate
40 Pivotal movement restriction section

A motorcycle (1) includes a step floor (20) on which a driver's legs are placed, and step floor enlarged sections (30) installed at both of left and right sides of the step floor (20). The step floor enlarged sections (30) cause a leftward/rightward width of a floor portion including the step floor (20) to be variable between a first leftward/rightward width (20A) and a second leftward/rightward width (30A) that is larger than the first leftward/rightward width (20A).

## Claims

1. A saddle riding vehicle comprising:
a step floor (20, 25) on which a driver's legs are placed; and
a step floor enlarged section (30, 50, 60, 70) installed on at least one side of the step floor (20, 25) in the leftward/rightward direction,
wherein the step floor enlarged section (30, 50, 60, 70) causes a leftward/rightward width of a floor portion including the step floor (20, 25) to be variable between a first leftward/rightward width (20A) and a second leftward/rightward width (30A, 50A, 60A, 70A) that is larger than the first leftward/rightward width (20A).

2. The saddle riding vehicle according to claim 1, wherein the step floor enlarged section (30, 60, 70) comprises a floor plate (33, 63, 73) pivotable about a pivot shaft (32A, 65, 71A) disposed at a side end portion of the step floor (20, 25).

3. The saddle riding vehicle according to claim 2, wherein the step floor enlarged section (30, 60, 70) is connected to the side end portion of the step floor (20, 25) or a vehicle body frame (5) via the pivot shaft (32A, 65, 71A).

4. The saddle riding vehicle according to claim 2 or 3, wherein a pivotal movement restriction section (40) configured to restrict pivotal movement of the step floor enlarged section (30, 60, 70) when the step floor enlarged section (30, 60, 70) is open is installed between the step floor enlarged section (30, 60, 70) and the step floor (20, 25) or the vehicle body frame (5).

5. The saddle riding vehicle according to any one of claims 2 to 4, wherein the pivot shaft (32A, 71A) is installed parallel to the step floor (20, 25) in a vehicle forward/rearward direction.

6. The saddle riding vehicle according to claim 1, wherein the step floor enlarged section (50, 60) is installed to be pulled out of a receiving position below the step floor (20, 25) outward in a leftward/rightward direction.

7. The saddle riding vehicle according to claim 6, wherein the step floor enlarged section (60) comprises a pivot shaft (65),
the pivot shaft (65) is installed to be perpendicular to the step floor (20, 25), and
the step floor enlarged section (60) is able to be pulled out of the receiving position outward in the leftward/rightward direction by pivotal movement about the pivot shaft (65).

8. The saddle riding vehicle according to any one of claims 1 to 7, wherein the step floor (20) comprises the step floor enlarged section (30, 50, 60, 70), and the entire upper surface is formed to be flat.

9. The saddle riding vehicle according to any one of claims 1 to 7, wherein the step floor (25) has a concave section (26) formed in an upper surface thereof in an arc-shaped cross section and extending in the leftward/rightward direction.

10. The saddle riding vehicle according to any one of claims 1 to 9, wherein the saddle riding vehicle is a scooter type vehicle,
a rear body (15) standing up behind the step floor (20, 25) and a seat (12) disposed above the rear body (15) are provided, and
an article receiving section (13) having an upper opening that is covered with the seat (12) to be opened and closed is provided in the rear body (15).
